# EUROPÄISCHE PATENTSCHRIFT

(11) **EP 4 168 666 B1**
(45) Veröffentlichungstag und Bekanntmachung des Hinweises auf die Patenterteilung: **15.05.2024**
(21) Anmeldenummer: 21740496.1
(22) Anmeldetag: 07.07.2021
(51) Int. Cl.: F03D 1/02

(54) **VORRICHTUNG ZUR NUTZUNG VON WINDENERGIE**
DEVICE FOR USING WIND ENERGY
DISPOSITIF DESTINÉ À L'UTILISATION DE L'ÉNERGIE ÉOLIENNE

(30) Priorität: 06.08.2020 DE 102020120769
(43) Veröffentlichungstag der Anmeldung: 26.04.2023
(73) Patentinhaber: Aeerstatica UG (Haftungsbeschränkt), 88214 Ravensburg (DE)
(72) Erfinder: GERBER, David, 88214 Ravensburg (DE); GERBER, Johannes, 70736 Fellbach-Oeffingen (DE)
(74) Vertreter: Otten, Roth, Dobler & Partner mbB Patentanwälte
(86) Internationale Anmeldenummer: PCT/EP2021/068806
(87) Internationale Veröffentlichungsnummer: WO 2022/028802

(56) Entgegenhaltungen:
- CN-A- 102 732 904
- CN-A- 105 781 898
- DE-A1- 3 331 029
- DE-A1- 4 117 952
- US-A1- 2006 251 505

## Beschreibung

Die Erfindung betrifft eine Vorrichtung zur Nutzung von Windenergie nach dem Oberbegriff des Anspruchs 1.

Aus dem Stand der Technik ist beispielsweise aus der DE 41 17 952 A1 ein Stromerzeuger bekannt, welcher neben Solarenergie auch Windenergie nutzt. Dieser Stromerzeuger umfasst einen Auftriebskörper, an dessen Bug und Heck entgegengesetzt drehende Luftschrauben angebracht sind.

Aufgabe der Erfindung ist es, eine Vorrichtung zur Nutzung von Windenergie dahingehend weiterzubilden, dass die Energieausbeute gesteigert, die Nutzungs- und Lebensdauer erhöht und der Instandhaltungsaufwand verringert werden können.

Die Aufgabe wird, ausgehend von einer Vorrichtung zur Nutzung von Windenergie der eingangs genannten Art, durch die kennzeichnenden Merkmale des Anspruchs 1 gelöst.

Durch die in den abhängigen Ansprüchen genannten Maßnahmen sind vorteilhafte Ausführungen und Weiterbildungen der Erfindung möglich.

Die erfindungsgemäße Vorrichtung zur Nutzung von Windenergie umfasst zunächst einen Auftriebskörper, der für die notwendige Auftriebskraft sorgt, um die Vorrichtung bzw. einen Teil der Vorrichtung in einen Flugzustand zu versetzen. Hierzu wird grundsätzlich ein Traggas, zum Beispiel Helium, verwendet, welches eine geringere Dichte als die Umgebungsluft aufweist, sodass durch die resultierende Auftriebskraft der Auftriebskörper bzw. die Vorrichtung zur Nutzung von Windenergie nach oben in die Luft steigt. Der Auftriebskörper ist so ausgebildet, dass er in einer Längsrichtung größer ist als in den anderen Richtungen. Insbesondere kann der Auftriebskörper eine Zigarrenform bzw. die für Luftschiffe charakteristische Formgebung besitzen. Diese Form bietet den Vorteil, dass sich der Auftriebskörper im Luftstrom definierter ausrichten kann. Eine entsprechende Stromlinienform kann für eine vorteilhafte Aerodynamik sorgen, damit die Rotoren vom Luftstrom möglichst effektiv angestrahlt werden.

Ferner umfasst die Vorrichtung gemäß der Erfindung wenigstens zwei Rotoren, die entsprechend in Längsrichtung an den entgegengesetzten Enden des Auftriebskörpers, also an dessen Bug und an dessen Heck drehbar gelagert sind. Eine Ausrichtung des Auftriebskörpers im Wind bzw. im Luftstrom erleichtert es also, die Rotoren entsprechend in den Wind zu stellen, sodass diese durch den Luftstrom möglichst effektiv gedreht werden können. Die dadurch entstehende Rotationsbewegung der Rotoren wird auf eine Generatorwelle übertragen, sodass ein Generator Strom erzeugen kann. Der Generator kann ein Teil der Vorrichtung zur Nutzung von Windenergie sein und insbesondere am, vorzugsweise im Auftriebskörper angeordnet werden. Die Übertragung der Drehbewegung kann über die Generatorwelle direkt zwischen Rotor und Generator ohne weiteres Getriebe bzw. ohne weitere Kraftumlenkung erfolgen.

Nach außen hin besitzt der Auftriebskörper eine Hülle, in der das Traggas, grundsätzlich in Traggaszellen, bevorratet ist, wobei jede der Traggaszellen zur Aufnahme des Traggases dient. Verteilt sich das Traggas nicht in einem Raum innerhalb der Hülle, sondern ist aufgeteilt in einzelne Teilräume, sogenannte Traggaszellen, so hat dies den Vorteil, dass immer noch eine Auftriebskraft bestehen bleibt, wenn zum Beispiel eine der Traggaszellen Leck schlägt und Gas daraus entweicht. Außerdem ist eine Tragstruktur vorgesehen, um die Hülle in einen formstabilen Zustand zu halten und um eine Halterung für die Rotoren bereitzustellen.

Die erfindungsgemäße Tragstruktur kann für eine deutlich verbesserte Rigidität sorgen. Die erfindungsgemäße Vorrichtung zur Nutzung von Windenergie zeichnet sich nun dadurch aus, dass die Tragstruktur wenigstens zwei Teilstrukturen umfasst, die jeweils eine Helixstruktur bilden. Diese Helixstrukturen weisen jeweils eine zueinander entgegengesetzte Windungsrichtung auf. Zudem verlaufen die beiden Helixstrukturen hinsichtlich ihrer Längsachse koaxial, d. h. die Längsachsen der jeweiligen Helixstrukturen bzw. die Längsachse der einbringenden der jeweiligen Helixstruktur fallen zusammen. Sie liegen auch parallel zur Längsrichtung, entlang der sich der langgestreckte Teil des Auftriebskörpers erstreckt.

Dadurch, dass die beiden Helixstrukturen entgegengesetzte Windungsrichtungen besitzen, überzieht die Tragstruktur gewissermaßen den Auftriebskörper gleichmäßig und mit symmetrischen Eigenschaften, um die Längsrichtung herum. Obgleich die Rotoren für sich genommen drehbar gelagert sind, muss dennoch berücksichtigt werden, dass keine Lagerung eine völlig reibungsfreie Bewegung zulässt und somit dennoch Kräfte bzw. ein Drehmoment auf den Auftriebskörper bzw. auf die Tragstruktur übertragen wird. Ferner überträgt die Aufnahme des Generators das Drehmoment auf die Struktur. Die entgegengesetzt gewundenen Helixstrukturen können somit dieses Drehmoment besser auffangen, denn durch die Geometrie der Helix wird immer ein Teil der Kraft in die Streben bzw. die Längsträger entlang deren Ausrichtung eingeleitet.

Weist die Tragstruktur zwei entgegengesetzt gewundene Teilstrukturen auf, so kann, unabhängig von der Drehrichtung eines Rotors, eine Kraftwirkung tangential in Längsträger eingeleitet werden. Die Längsträger sind gegenüber einer tangential verlaufenden Krafteinleitung besonders stabil. Der Kraftfluss erfolgt dann entlang der Helixstruktur und kann sich so über eine größere Wegstrecke über die gesamte Tragstruktur verteilen. Insgesamt sorgen die entgegengesetzt gewundenen Teilstrukturen dafür, dass die Tragstruktur in Bezug zur Längsrichtung eine rigide und weitgehend symmetrische Form ausgebildet.

In besonders vorteilhafter Weise stehen bei einer Ausführungsform die Ebenen, in denen die Rotation der Rotoren abläuft, senkrecht zur Längsrichtung. Daraus ergibt sich der Vorteil, dass dann, wenn sich der Auftriebskörper in den Wind stellt, die Rotoren parallel zu ihrer Drehachse angestrahlt werden können und somit eine maximale Kraftübertragung möglich ist. Die Stromerzeugung aus Windenergie kann durch eine derartige Anordnung somit optimiert werden. Rotieren die beiden Rotoren zueinander gegenläufig, so kompensieren sich zumindest teilweise die Antriebskräfte, welche die Rotoren ansonsten auf den Auftriebskörper ausüben. Freie Drehmomente können vermieden werden. Durch die gegenläufig gewundene Struktur wiederum können in vorteilhafter Weise, trotz gegenläufig rotierender Rotoren, die auftretenden Verwindungskräfte auf den Auftriebskörper besser aufgefangen und kompensiert werden.

Bei der Ausführungsform der Erfindung kann der Auftriebskörper bzw. die Hülle bzw. die Einhüllende der Tragstruktur sich in Längsrichtung zu den jeweiligen Enden hin verjüngen und somit einer Stromlinienform folgen. Der Luftstrom kann somit möglichst ohne durch den Auftriebskörper an sich bedingte Wirbelbildung um den Auftriebskörper fließen. Durch eine wirbelfreie Strömung wird auch die Rotation der Rotoren effektiver, da diese ohne Hindernis angestrahlt werden. Dies ist umso mehr der Fall, da die Rotoren am Bug bzw. Heck des Auftriebskörpers hintereinander angeordnet sind und zumindest ein Teil des Luftstroms, der den in Stromrichtung hinteren Rotor am Heck erreicht, den ersten Rotor am Bug passiert hat und entlang der Hülle des Auftriebskörpers entlang gelaufen ist.

Zur Stromerzeugung kann grundsätzlich ein Generator verwendet werden. Dieser ist in vorteilhafter Weise innerhalb des Auftriebskörpers angeordnet, sodass keine mechanische Übertragung zu einem Generator am Boden erfolgen muss. Durch eine Anordnung innerhalb des Auftriebskörpers kann die von den Rotoren ausgeübte Drehbewegung unmittelbar in den Generator eingeleitet werden. In vorteilhafter Weise können zwei Generatoren vorgesehen sein, für jeden der Rotoren jeweils einer. Die elektrische Energie kann über ein Kabel hingegen einfacher als eine mechanische Drehbewegung zum Boden hin übertragen werden. Ist der Generator innerhalb des Auftriebskörpers angeordnet, so muss hinsichtlich seiner Formgebung keine unmittelbare Anpassung an die Stromlinienform erfolgen.

Bei einer bevorzugten Weiterbildung der Erfindung münden die Tragstrukturen am Bug und am Heck jeweils in einer Nabe, welche die Lagerung für die drehbare Rotorwelle und/oder Generatorwelle bildet. Die Nabe kann als Lager ausgebildet sein, in welcher die Rotorwelle, die auch die Rotorblätter trägt, drehbar gelagert ist. Zur Lagerung können entsprechende Wälzlager (Kugellagerrollenlager oder dergleichen) verwendet werden. Trotz der drehbaren Lagerung erfolgt die Drehbewegung der Rotorwelle in der Nabe nicht reibungsfrei. Es wird ein Drehmoment auf die Nabe und somit auch auf die Tragstruktur übertragen. In vorteilhafter Weise kann die Tragstruktur aufgrund ihrer Formgebung und insbesondere der Helixstrutur in beiden Windungsrichtungen, unabhängig von der Drehrichtung des Rotors, dieses Drehmoment jedoch auffangen.

Die Teilstrukturen wiederum weisen jeweils einen Längsträger auf, welcher dieser helikalen Formgebung folgt. Bei einer bevorzugten Ausführungsvariante der Erfindung kann dieser Längsträger als Polygon ausgestaltet sein. Grundsätzlich kann der Längsträger als Rohr ausgebildet sein, welches innen hohl ausgebildet ist. Der Längsträger kann auch in seiner Ausgestaltung als Rohr sowohl als Polygon ausgebildet sein als auch eine Kreisform im Querschnitt aufweisen. Eine rohrartige Struktur zeichnet sich dadurch aus, dass sie senkrecht zu ihrer Längserstreckung ein höheres Biegemoment aufweist und somit grundsätzlich die Stabilität erhöhen kann. Die Herstellung von Rohrsegmenten, insbesondere der Biegevorgang, kann mittels CNC-Verfahren gesteuert werden.

Durch die Ausbildung als Polygon kann ebenfalls das Biegemoment in bestimmten Richtungen erhöht werden, sodass die Tragstruktur gegenüber den zu erwartenden Belastungen stabiler ist. Die Helixstruktur insgesamt dient vor allem dazu, eine Kraftwirkung tangential in die Längsträger einzuleiten, sodass der Kraftfluss entlang der Längsträger weitergeleitet wird. Dennoch sollten die Längsträger senkrecht zu ihrer Längserstreckung eine entsprechende Stabilität aufweisen, um nicht zum Beispiel einzuknicken, sodass der Kraftfluss die Tragstruktur zerstört.

Die Längsträger können zum Beispiel so aufgebaut sein, dass sie in ihren Ecken im Querschnitt sich jeweils aus Streben zusammensetzen, wobei die Streben selbst wiederum zur Erhöhung des Biegemoments auch als Hohlstrukturen bzw. Rohre ausgebildet sein können. Zur Erhöhung der Stabilität gegenüber Zugkräften können Längsträger jeweils auch ein Zugseil aufweisen. Um Kräfte, die senkrecht zur Längsrichtung wirken, besser aufnehmen zu können, können zusätzlich auch Querverstrebungen vorgesehen sein, zum Beispiel im Inneren der Rohre bzw. Polygone bzw. der Längsträger darüber hinaus können aber auch zwischen den Teilstrukturen bzw. innerhalb der Tragstruktur durch den Auftriebskörper sogenannte Querspanten zur Verstärkung eingesetzt werden. Darüber hinaus können durch derartige Querspanten auch Kräfte zwischen den unterschiedlichen Teilstrukturen übertragen werden, sodass insgesamt die Stabilität erhöht werden kann.

Darüber hinaus können bei einem Ausführungsbeispiel der Erfindung auch punktuelle Verbindungsstrukturen vorgesehen sein, etwa in Form von Knoten. Zunächst können die beiden Teilstrukturen untereinander Knoten an einzelnen Stellen miteinander verbunden werden, sodass eine Kraftwirkung, die über die Nabe durch den Rotor übertragen wird, insgesamt auf beide Teilstrukturen verteilt wird. Durch derartige Knoten-Punkte verfestigt sich die Tragstruktur und wird stabiler. Darüber hinaus können Knotenpunkte auch Längsträger und Querspanten miteinander verbinden, wobei insbesondere ein Knoten seitlich versetzt oder zentrisch zum Überschneidungsbereich von Längsträger und Querspant angeordnet sein kann. Dies hängt davon ab, in welcher Richtung eine Krafteinwirkung erwartet wird, sodass der jeweilige Knotenpunkt diese Kraft auffangen und ein höheres Maß an Stabilität geben kann.

Während eine zentrische Anordnung es eher begünstigt, Kräfte aufzunehmen, die bei einer vergleichsweise homogenen Kräfteverteilung innerhalb der Tragstruktur wirken, kann der Versatz eines Knotenpunktes dazu führen, dass einer anisotropen Kräfteverteilung innerhalb der Tragstruktur stärker Rechnung getragen wird. Eine anisotrope Kräfteverteilung kann zum Beispiel dadurch auftreten, dass sich der Auftriebskörper gemäß der Strömungsrichtung ausrichtet und somit immer der Bug angestrahlt wird.

Eine vergleichsweise einfache Verbindungstruktur in Form eines Knotens wird bei einer Ausführungsvariante der Erfindung durch eine Ummantelung bewerkstelligt. Um Gewicht einzusparen und gleichzeitig die Stabilität zu verbessern, kann etwa faserhaltiges Material hierfür verwendet werden. Denkbar ist darüber hinaus, dass die Knoten zur Vereinfachung der Fertigung in einem 3D-Druckverfahren hergestellt werden, gegebenen falls mit einer Ummantelung aus faserverstäktem Material. Es können sowohl Flach- als auch Konturformen, insbesondere aus faserhaltige Material zur Verstärkung ebenfalls verwendet werden. Bei einer Konturform können zwei Bänder mit einem Füllstoff zusammen, der ein dreidimensionale Form erzeugt, um das Werkstück, hier also um die jeweiligen Längsträger bzw. Querspanten, gewickelt werden. Die Verstärkungen aus Kunststoff werden auf dem montierten Knoten manuell oder automatisch ausgehärtet.

Um den Helixstrukturen gerecht zu werden und Verjüngung im Bug- und Heckbereich des Auftriebskörpers realisieren zu können, können die Längsträger bzw. Rohre gebogen ausgebildet sein, insbesondere als gebogene Rohrsegmente.

Der Auftriebskörper mit den Rotoren gemäß Erfindung besitzt grundsätzlich den Vorteil, dass er nicht in Bodennähe arbeitet, sondern dass der Betrieb in beträchtlicher Höhe, insbesondere in einer Höhe von einigen 100 m platziert wird. In derartigen Höhen sind stärkere und konstantere Windverhältnisse zu erwarten, sodass eine höhere Stromproduktion zu erwarten ist. Insofern ist eine Verankerung am Boden notwendig, die insbesondere über ein Zugseil erfolgen kann, um dynamische und statische Kräfte aufzunehmen und gegebenenfalls auch die Flughöhe des Auftriebskörpers veränderbar zu gestalten. Entlang oder über dieses Zugseils kann der Strom über ein Kabel zum Boden hin geführt und dort weiterverarbeitet werden.

### Ausführungsbeispiele

Ausführungsbeispiele der Erfindung werden nachstehend unter Angabe weiterer Einzelheiten und Vorteile näher erläutert. Im Einzelnen zeigen:
- Fig. 1:: eine Vorrichtung zur Nutzung von Windenergie gem. der Erfindung,
- Fig. 2, 3:: drei- und viereckige Längsträgerquerschnitte,
- Fig. 4:: eine schematische Darstellung eines Längsträgers, sowie
- Fig. 5-7:: Anordnungsvarianten von Knotenpunkten.

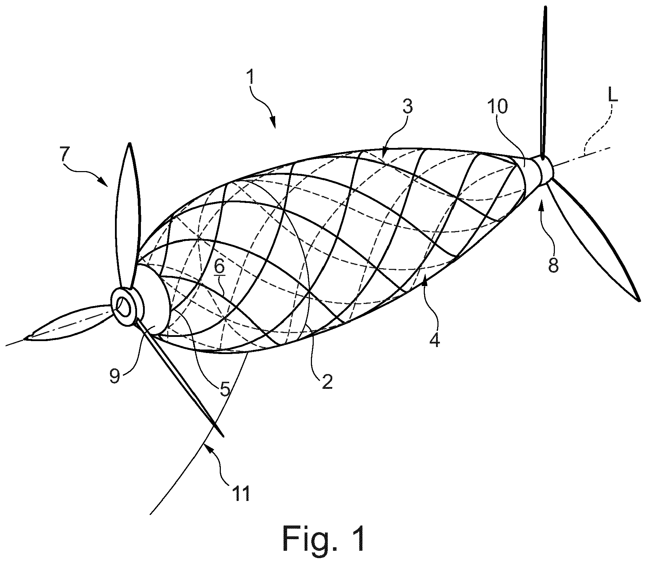

Figur 1 zeigt eine Vorrichtung 1 zur Nutzung von Windenergie mit einem Auftriebskörper 2, der sich in Längsrichtung L erstreckt. Der Auftriebskörper 2 umfasst eine Hülle 3 zum Schutz gegen Witterung, innerhalb der das Traggas in Traggaszellen bevorratet ist, das für die nötige Auftriebskraft sorgt, um einen Flugzustand herzustellen. Innerhalb des Auftriebskörpers sind Traggsaszellen angeordnet, damit bei einer Beschädigung einer Zelle nicht das gesamte, den Auftrieb liefernde Gas entweichen kann. Diese Traggaszellen sind im Einzelnen nicht in Figur 1 dargestellt.

Darüber hinaus ist eine Tragstruktur 4 vorgesehen, die von der Hülle 3 überzogen ist, sodass die Hülle 3 gewissermaßen wie die Einhüllende der Tragstruktur 4 bildet. Die Tragstruktur 4 setzt sich zusammen aus zwei Teilstrukturen 5, 6, die jeweils eine Helix bilden, welche sich wiederum entlang der Längsrichtung L erstreckt und zu den Rotoren 7, 8 bzw. Bug und Heck des Auftriebskörpers 2 hin sich verjüngt. Die Tragstruktur 4 bzw. Teilstrukturen 5, 6 münden jeweils in Naben 9, 10, welche die Lagerung für die Rotoren 7 ,8 bilden. An der Neigung der Rotorblätter der Rotoren 7, 8 ist zu erkennen, dass sich die beiden Rotoren dahingehend unterscheiden, dass sie entlang der Längsrichtung L in unterschiedlichen Richtungen rotieren. Darüber hinaus ist eine Verbindung 11 zum Boden hin vorgesehen, die ein Zugseil umfasst, um den Auftriebskörper 2 gegenüber dynamischen und statischen Kräften halten zu können, ihn am Boden zu verankern. Gleichzeitig ist in diese Verbindung 11 auch ein Kabel zur Stromführung integriert.

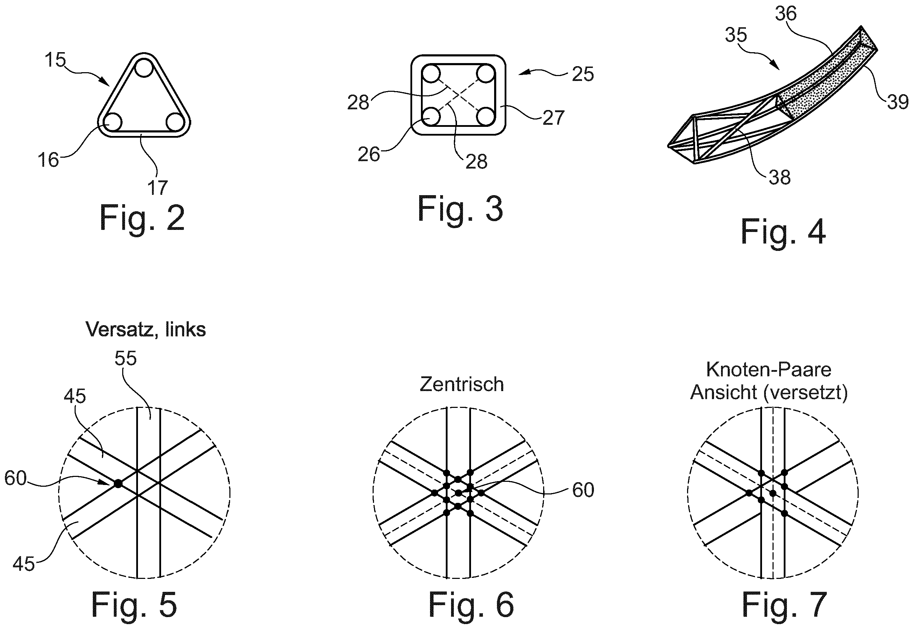

Die Teilstrukturen 5 und 6 bestehen zunächst aus Längsträgern, welche in Figur 1 unmittelbar die jeweiligen Teilstrukturen ausbilden. Mögliche Querschnitte der Längsträger sind im den Figuren 2 und 3 dargestellt. Figur 2 zeigt einen Längsträger 15, der im Profil dreieckig ausgebildet ist. In seinen Ecken befinden sich jeweils Rohre 16. Diese rohrartigen Streben werden nach außen hin von einem einzelnen dreieckigen Rohr 17 umgeben.

In Figur 3 wiederum ist ein Längsträger 25 dargestellt, der im Querschnitt ein Viereck verkörpert. Auch hier sind in den Ecken jeweils Rohre 26 angeordnet, die zur Verstärkung des Biegemomentes beitragen. Nach außen hin werden die Rohre von einer einhüllenden Vierkant-Längsstruktur umgeben, die ebenfalls somit ein Rohr darstellt. Die Rohre 26 in den Ecken des Vierecks sind durch innere Verstrebungen 28 entlang der Diagonalen miteinander verbunden. Auch hierdurch wird die Stabilität durch ein höheres Biegemoment verstärkt. Verstrebungen können auch durch Seile bzw. Zugseile zwischen Streben, Längsträgern und Querspanten oder dergleichen realisiert werden, durch welche die Rigidität erhöht wird.

Figur 4 wiederum zeigt einen Längsträger 35, der rohrartige Streben 36 in den Ecken einer im Querschnitt bestehenden Dreiecksstruktur aufweist, wobei die Streben 36 durch Querverstrebungen, die innerhalb des Dreiecks verlaufen, verstärkt wird. Darüber hinaus wird die Struktur durch wenigstens ein Zugseil 39 verstärkt.

Die Figuren 5, 6 und 7 zeigen Längsträger 45 und Querspanten 55, die über Knotenpunkte 60 verbunden sind. In Figur 5 ist ein nach links versetzter Knotenpunkt dargestellt, während in Figur 6 eine zentrierte Anordnung des Knotenpunktes 60 dargestellt ist.

In Figur 7 wiederum sind versetzt angeordnete Knotenpaare vorgesehen. Insbesondere die Figuren 5 und 7 können vor allem dazu eingesetzt werden, anisotrope Kräfte aufzunehmen und die Stabilität zu verbessern.

### Bezugszeichen:

- 1: Vorrichtung zur Erzeugung von Windenergie
- 2: Auftriebskörper
- 3: Hülle
- 4: Tragstruktur
- 5: Teilstruktur
- 6: Teilstruktur
- 7: Rotor
- 8: Rotor
- 9: Nabe
- 10: Nabe
- 11: Zugseil mit Kabel
- 15: Längsträger
- 16: Rohr
- 17: einhüllendes Rohr (dreieckiger Querschnitt)
- 25: Längsträger
- 26: Rohr
- 28: innere Diagonalverstrebung
- 35: Längsträger
- 36: rohrartige Streben
- 39: Zugseil
- 45: Längsträger
- 55: Querspanten
- 60: Knoten
- L: Längsrichtung

## Patentansprüche

1. Vorrichtung (1) zur Nutzung von Windenergie umfassend:
• einen Auftriebskörper (2), um über ein in den Auftriebskörper (2) bevorratetes Traggas eine Auftriebskraft zu erzeugen, um den Auftriebskörper (2) in einen Flugzustand zu versetzen, wobei sich der Auftriebskörper (2) in einer Längsrichtung (L) erstreckt,
• wenigstens zwei Rotoren (7, 8), welche in Längsrichtung (L) an den entgegengesetzten Enden des Auftriebskörpers (2) drehbar gelagert sind, um deren Rotationsbewegung auf eine Generatorwelle eines Generators zur Stromerzeugung zu übertragen,
• wobei der Auftriebskörper (2) eine Hülle (3) zum Schutz gegen Witterung und/oder zur Bevorratung des Traggases, die insbesondere wenigstens zwei Traggaszellen zur Aufnahme des Traggases umfasst, und eine Tragstruktur (4) aufweist, um die Hülle (3) in einem formstabilen Zustand zu halten und um eine Halterung für die Rotoren (7, 8) bereitzustellen,
• **dadurch gekennzeichnet, dass** die Tragstruktur (4) wenigstens zwei Teilstrukturen (5, 6) umfasst, die jeweils eine Helixstruktur bilden, wobei die Teilstrukturen (5, 6) koaxial ausgerichtet sind und jeweils eine zueinander entgegengesetzte Windungsrichtung aufweisen.

2. Vorrichtung (1) zur Nutzung von Windenergie nach Anspruch 1, **dadurch gekennzeichnet, dass** die Rotoren (7, 8) so angeordnet sind, dass ihre Rotationsebenen senkrecht zur Längsrichtung (L) stehen.

3. Vorrichtung (1) zur Nutzung von Windenergie nach einem der vorgenannten Ansprüche, **dadurch gekennzeichnet, dass** die Rotoren (7, 8) so ausgebildet sind, dass sie, insbesondere bei einer Luftströmung in Längsrichtung (L), gegenläufig rotieren, wobei die Rotoren (7, 8) insbesondere jeweils um eine Achse senkrecht zur Längsrichtung (L) schwenkbar gelagert sind.

4. Vorrichtung (1) zur Nutzung von Windenergie nach einem der vorgenannten Ansprüche, **dadurch gekennzeichnet, dass** der Auftriebskörper (2) und/oder die Hülle (3) und /oder die Einhüllende der Tragstruktur (4) in Längsrichtung (L) zu den jeweiligen Enden hin verjüngend zuläuft.

5. Vorrichtung (1) zur Nutzung von Windenergie nach einem der vorgenannten Ansprüche, **dadurch gekennzeichnet, dass** wenigstens ein Generator zur Stromerzeugung vorgesehen ist, um die Rotationsbewegung wenigstens eines der Rotoren (7, 8) auf die Generatorwelle des Generators zu übertragen.

6. Vorrichtung (1) zur Nutzung von Windenergie nach einem der vorgenannten Ansprüche, **dadurch gekennzeichnet, dass** die Tragstruktur (4):
• an den Enden jeweils in einer Nabe (9, 10) mündet, welche die Lagerung für die drehbare Rotorwelle und/oder die Generatorwelle bildet und/oder
• an eine Aufnahme zur Halterung des Generators mechanisch gekoppelt ist und/oder mit einer Aufnahme zur Halterung des Generators verbunden ist.

7. Vorrichtung (1) zur Nutzung von Windenergie nach einem der vorgenannten Ansprüche, **dadurch gekennzeichnet, dass** die Teilstrukturen (5, 6) jeweils einen Längsträger (15, 35, 45) aufweisen, der im Querschnitt ein Polygon ausbildet.

8. Vorrichtung (1) zur Nutzung von Windenergie nach Anspruch 7, **dadurch gekennzeichnet, dass** die Längsträger (15, 35, 45) jeweils als Rohr ausgebildet sind und/oder in ihren Ecken jeweils ein Rohr als Verstrebung entlang der Längserstreckung der Teilstruktur (5, 6) verläuft.

9. Vorrichtung (1) zur Nutzung von Windenergie nach Anspruch 7 oder 8, **dadurch gekennzeichnet, dass** die Längsträger (15, 35, 45) jeweils ein Zugseil zur Erhöhung der Zugstabilität aufweisen.

10. Vorrichtung (1) zur Nutzung von Windenergie nach einem der Ansprüche 7 bis 9, **dadurch gekennzeichnet, dass** die Längsträger (15, 35, 45), insbesondere als Rohre und/oder Polygone, jeweils im Inneren eine Querverstrebung (28) aufweisen.

11. Vorrichtung (1) zur Nutzung von Windenergie nach einem der Ansprüche 7 bis 10, **dadurch gekennzeichnet, dass** die Tragstruktur (4) und/oder die Teilstrukturen (5, 6) wenigstens einen Querspant (55) zur Verstärkung aufweisen.

12. Vorrichtung (1) zur Nutzung von Windenergie nach Anspruch 11, **dadurch gekennzeichnet, dass** wenigstens ein Knoten (60) als punktuelle Verbindungsstruktur vorgesehen ist, welcher jeweils wenigstens einen der Längsträger (15, 35, 45) und wenigstens einen der Querspanten (55) verbindet, wobei insbesondere der Knoten (60) und/oder wenigstens einer der Knoten (60) seitlich versetzt oder zentrisch zum Überschneidungsbereich von jeweiligem Längsträger (15, 35, 45) und Querspant angeordnet ist / sind.

13. Vorrichtung (1) zur Nutzung von Windenergie nach Anspruch 12, **dadurch gekennzeichnet, dass** der wenigstens eine Knoten (60) :
• 3D-gedruckt ist und/oder
• eine Ummantelung aus faserhaltigem Material zur Verstärkung aufweist und/oder
• eine Flach- oder Konturform aus faserhaltigem Material zur Verstärkung aufweist.

14. Vorrichtung (1) zur Nutzung von Windenergie nach Anspruch 8 und einem der Ansprüche 11 bis 13, **dadurch gekennzeichnet, dass** die Längsträger (15, 35, 45) und/oder die Rohre und/oder die Querspanten als gebogene Rohrsegmente ausgebildet sind.

15. Vorrichtung (1) zur Nutzung von Windenergie nach einem der vorgenannten Ansprüche, **dadurch gekennzeichnet, dass**
• ein Kabel (11) zur Leitung und/oder Übertragung des durch den Generator erzeugten elektrischen Stroms und/oder
• ein Zugseil (11) als Verankerung am Boden, um die dynamischen und statischen Kräfte aufzunehmen und die Flughöhe des Auftriebskörpers (2) veränderbar zu machen, vorgesehen ist/sind.

## Claims

1. Device (1) for using wind energy comprising:
• a buoyancy body (2) in order to generate a lifting force by a lifting gas supplied to the buoyancy body (2) in order to set the buoyancy body (2) into a flying state wherein the buoyancy body (2) extends in a longitudinal direction (L);
• at least two rotors (7, 8) which are mounted in rotatable manner in the longitudinal direction (L) at the opposite ends of the buoyancy body (2) in order to transmit their rotational movement to a generator shaft of a generator in order to generate power;
• wherein the buoyancy body (2) has a casing (3) for protection against weathering and/or for storing the lifting gas which comprises in particular at least two lifting gas cells for receiving the lifting gas, and has a supporting structure (4) in order to hold the casing (3) in a dimensionally stable condition and to provide a holder for the rotors (7, 8);
• **characterized in that** the supporting structure (4) comprises at least two sub-structures (5, 6) which each form a helix structure wherein the sub-structures (5, 6) are oriented coaxially and each have an opposite winding direction to one another.

2. Device (1) for using wind energy according to Claim 1 **characterized in that** the rotors (7, 8) are arranged in such manner that their rotational planes are at right angles to the longitudinal direction (L).

3. Device (1) for using wind energy according to one of the preceding claims **characterized in that** the rotors (7, 8) are configured so that they rotate in opposite directions in particular in the event of an air flow in the longitudinal direction (L), wherein the rotors (7, 8) are each mounted in particular for pivotal movement about an axis perpendicular to the longitudinal direction (L).

4. Device (1) for using wind energy according to one of the preceding claims **characterized in that** the buoyancy body (2) and/or the casing (3) and/or the wrapping of the supporting structure (4) runs in the longitudinal direction (L) tapering towards the respective ends.

5. Device (1) for using wind energy according to one of the preceding claims **characterized in that** at least one generator is provided for generating power in order to transmit the rotational movement of at least one of the rotors (7, 8) to the generator shaft of the generator.

6. Device (1) for using wind energy according to one of the preceding claims **characterized in that** the supporting structure (4):
• opens at each end in a hub (9, 10) which forms the bearing for the rotatable rotor shaft and/or the generator shaft and/or
• is mechanically coupled to a receiver for holding the generator and/or is connected to a receiver for holding the generator.

7. Device (1) for using wind energy according to one of the preceding claims **characterized in that** the sub-structures (5, 6) each have a longitudinal support (15, 35, 45) which forms a polygon in cross section.

8. Device (1) for using wind energy according to Claim 7 **characterized in that** the longitudinal supports (15, 35, 45) are each configured as pipes and/or a pipe runs in each corner as reinforcement along the longitudinal extent of the sub-structure (5, 6).

9. Device (1) for using wind energy according to Claim 7 or 8 **characterized in that** the longitudinal supports (15, 35, 45) each have a tow rope for increasing the tensile stability.

10. Device (1) for using wind energy according to one of Claims 7 to 9 **characterized in that** the longitudinal supports (15, 35, 45), in particular formed as pipes and/or polygons, each have a cross stay (28) inside.

11. Device (1) for using wind energy according to one of Claims 7 to 10 **characterized in that** the supporting structure (4) and/or the sub-structures (5, 6) have at least one cross spar (55) for reinforcement.

12. Device (1) for using wind energy according to Claim 11 **characterized in that** at least one joint (60) is provided as a selective connecting structure which connects each at least one of the longitudinal supports (15, 35, 45) and at least one of the cross spars (55) wherein in particular the joint (60) and/or at least one of the joints (60) is/are arranged laterally offset or centrally in relation to the intersection region of the respective longitudinal support (15, 35, 45) and cross spar.

13. Device (1) for using wind energy according to Claim 12 **characterized in that** the at least one joint (60) :
• is 3-D printed and/or
• has a sheath of fibrous material for reinforcement and/or
• has a flat or contoured shape of fibrous material for reinforcement.

14. Device (1) for using wind energy according to Claim 8 and one of Claims 11 to 13 **characterized in that** the longitudinal supports (15, 35, 45) and/or the pipes and/or the cross spars are configured as bent tubular segments.

15. Device (1) for using wind energy according to one of the preceding claims **characterized in that** there is/are provided
• a cable (11) for leading and/or transmitting the electrical power generated by the generator and/or
• a tow rope (11) as anchorage to the ground in order to take up the dynamic and static forces and to change the flying height of the buoyancy body (2) .

## Revendications

1. Dispositif (1) destiné à l'utilisation de l'énergie éolienne, comprenant :
• un corps de sustentation (2) pour générer une force de sustentation via un gaz porteur stocké dans le corps de sustentation (2) afin de mettre le corps de sustentation (2) dans un état de sustentation, le corps de sustentation (2) s'étendant dans une direction longitudinale (L),
• au moins deux rotors (7, 8) qui sont montés à rotation dans la direction longitudinale (L) aux extrémités opposées du corps de sustentation (2), afin de transmettre leur mouvement de rotation à un arbre de générateur d'un générateur pour la production de courant,
• le corps de sustentation (2) présentant une enveloppe (3) pour la protection contre les intempéries et/ou pour le stockage du gaz porteur, qui comprend en particulier au moins deux cellules de gaz porteur pour recevoir le gaz porteur, et une structure porteuse (4) pour maintenir l'enveloppe (3) dans un état indéformable et pour fournir un support pour les rotors (7, 8),
• **caractérisé en ce que** la structure de support (4) comprend au moins deux parties de structure (5, 6) formant chacune une structure hélicoïdale, les parties de structure (5, 6) étant orientées coaxialement et présentant chacune une direction d'enroulement opposée l'une à l'autre.

2. Dispositif (1) destiné à l'utilisation de l'énergie éolienne selon la revendication 1, **caractérisé en ce que** les rotors (7, 8) sont agencés de telle sorte que leurs plans de rotation soient perpendiculaires à la direction longitudinale (L).

3. Dispositif (1) destiné à l'utilisation de l'énergie éolienne selon l'une des revendications précédentes, **caractérisé en ce que** les rotors (7, 8) sont conçus de telle sorte qu'ils tournent en sens inverse, en particulier dans le cas d'un flux d'air dans la direction longitudinale (L), les rotors (7, 8) étant notamment montés pivotants chacun autour d'un axe perpendiculaire à la direction longitudinale (L).

4. Dispositif (1) destiné à l'utilisation de l'énergie éolienne selon l'une des revendications précédentes, **caractérisé en ce que** le corps de sustentation (2) et/ou l'enveloppe (3) et/ou l'extrémité d'enveloppe de la structure porteuse (4) se rétrécit dans la direction longitudinale (L) vers les extrémités respectives.

5. Dispositif (1) destiné à l'utilisation de l'énergie éolienne selon l'une des revendications précédentes, **caractérisé en ce qu'**au moins un générateur est prévu pour la production de courant, afin de transmettre le mouvement de rotation d'au moins un des rotors (7, 8) à l'arbre de générateur.

6. Dispositif (1) destiné à l'utilisation de l'énergie éolienne selon l'une des revendications précédentes, **caractérisé en ce que** la structure porteuse (4) :
• débouche à chacune de ses extrémités sur un moyeu (9, 10) formant palier pour l'arbre rotatif du rotor et/ou l'arbre de générateur et/ou
• est couplée mécaniquement à un réceptacle de support de l'alternateur et/ou est reliée à un réceptacle de support de l'alternateur.

7. Dispositif (1) destiné à l'utilisation de l'énergie éolienne selon l'une des revendications précédentes, **caractérisé en ce que** les parties de structure (5, 6) présentent chacune un longeron (15, 35, 45) qui forme un polygone en section transversale.

8. Dispositif (1) destiné à l'utilisation de l'énergie éolienne selon la revendication 7, **caractérisé en ce que** les longerons (15, 35, 45) sont chacun réalisés sous forme d'un tube et/ou **en ce que**, dans leurs angles, un tube s'étend respectivement en tant qu'entretoise le long de l'extension longitudinale de la partie de structure (5, 6) .

9. Dispositif (1) destiné à l'utilisation de l'énergie éolienne selon la revendication 7 ou la revendication 8, **caractérisé en ce que** les longerons (15, 35, 45) présentent chacune un câble de traction pour augmenter la stabilité en traction.

10. Dispositif (1) d'exploitation de l'énergie éolienne selon l'une des revendications 7 à 9, **caractérisé en ce que** les longerons (15, 35, 45), notamment sous forme de tubes et/ou de polygones, comportent chacun à l'intérieur une entretoise transversale (28).

11. Dispositif (1) pour l'exploitation de l'énergie éolienne selon l'une des revendications 7 à 10, **caractérisé en ce que** la structure porteuse (4) et/ou les parties de structure (5, 6) comportent au moins une membrure transversale (55) de renforcement.

12. Dispositif (1) destiné à l'utilisation de l'énergie éolienne selon la revendication 11, **caractérisé en ce qu'**il est prévu au moins un noeud (60) en tant que structure de liaison ponctuelle qui relie respectivement au moins l'un des longerons (15, 35, 45) et au moins l'une des membrures transversales (55), le noeud (60) et/ou au moins l'un des noeuds (60) étant notamment décalé(s) latéralement ou centré(s) par rapport à la zone de chevauchement du longeron (15, 35, 45) et de la membrure transversale respectifs.

13. Dispositif (1) destiné à l'utilisation de l'énergie éolienne selon la revendication 12, **caractérisé en ce que** ledit au moins un noeud (60) :
• est imprimé en 3D et/ou
• présente un enrobage en matériau fibreux pour le renforcement et/ou
• présente une forme plate ou un contour en matériau contenant des fibres pour le renforcement.

14. Dispositif (1) pour l'exploitation de l'énergie éolienne selon la revendication 8 et l'une des revendications 11 à 13, **caractérisé en ce que** les longerons (15, 35, 45) et/ou les tubes et/ou les traverses sont réalisés sous forme de segments de tubes cintrés.

15. Dispositif (1) destiné à l'utilisation de l'énergie éolienne selon l'une des revendications précédentes, **caractérisé en ce que**
• il est prévu un câble (11) pour la conduction et/ou la transmission du courant électrique généré par le générateur et/ou
• un câble de traction (11) servant d'ancrage au sol pour absorber les forces dynamiques et statiques et pour rendre variable l'altitude de vol du corps de sustentation (2).
